# EUROPÄISCHE PATENTANMELDUNG

(11) **EP 4 700 391 A1**
(43) Veröffentlichungstag der Anmeldung: **25.02.2026**
(21) Anmeldenummer: 24196028.5
(22) Anmeldetag: 22.08.2024
(51) Int. Cl.: G01N 35/10, B01F 31/65, G01N 21/03, G01N 21/13, G01N 21/27, G01N 21/31, G01N 21/77, G01N 21/78, G01N 21/64

(54) **VERFAHREN ZUM MISCHEN VON FLUIDEN, UND PIPETTIERVORRICHTUNG**

(71) Anmelder: Hombrechtikon Systems Engineering AG, 8634 Hombrechtikon (CH)
(72) Erfinder: LUTZE, Konstantin, 8713 Uerikon (CH); QUINTEL, Harald, 8266 Steckborn (CH)
(74) Vertreter: IPS Irsch AG

(57) **Zusammenfassung**

Verfahren zum Mischen von Fluiden, umfassend die folgenden Schritte: ein Bereitstellen einer Pipettenspitze (1) zum Aufnehmen eines Fluids, ein Aufnehmen eines ersten Fluids (8) in die Pipettenspitze (1), ein Aufnehmen eines zweiten Fluids (9) in die Pipettenspitze (1), sowie ein Durchmischen und Analysieren des ersten (8) und des zweiten Fluids (9) in die Pipettenspitze (1), und Pipettiervorrichtung.

## Beschreibung

Die Erfindung betrifft ein Verfahren zum Mischen von Fluiden, Pipettenspitze zur Verwendung in einem Verfahren zur Mischung von Fluiden, Pipettiervorrichtung zur Verwendung in einem Verfahren zur Mischung von Fluiden und einen Pipettierautomat zur Verwendung von Pipettiervorrichtungen gemäss dem Oberbegriff der unabhängigen Ansprüche.

Im Stand der Technik wird ein Verfahren genutzt, in welchem Fluide gemischt werden, indem ein erstes Fluid aus einem Gefäss entnommen und in ein zweites Gefäss abgegeben werden, in welchem sich ein zweites Fluid befindet. Hier werden die beiden Fluide dann gemischt. Das Mischen erfolgt dabei durch Auf- und Abpipettieren der Fluide in dem zweiten Gefäss.

Zum Aufnehmen der Fluide wird dabei eine Pipette verwendet. Meist werden Pipetten dabei im medizinischen Bereich verwendet, wobei Pipettenspitzen als Wegwerfartikel aus Kunststoff verwendet werden, um Kontaminationen zu vermeiden. Für kleine Volumina werden sogenannte Mikropipetten verwendet, wobei kleine Volumina von ungefähr 1 Mikroliter und mehr pipettiert werden können. Für repetitive Arbeiten gibt es elektronisch gesteuerte Pipetten, welche insbesondere auch bei Laborautomaten und -robotern Anwendung finden.

Manche Pipetten arbeiten nach dem Verdrängungsprinzip, wobei ein beweglicher Kolben Luft verdrängt, beziehungsweise heranzieht, wodurch eine Flüssigkeit aus der beziehungsweise in die Pipettenspitze gelangt.

Alternativ zum Verdrängerprinzip gibt es im Stand der Technik Pipetten, welche nach dem Luftpolsterprinzip arbeiten. Eine entsprechende Pipettiervorrichtung ist zum Beispiel aus der DE10237770A1 bekannt. Hierbei trennt eine Luftsäule die in der Pipettenspitze aufgesaugte Flüssigkeit und einen Innenraum der Pipette. Durch die Bewegung eines Pumpelements der Pumpe entsteht ein Unterdruck in der Pipettenspitze, der das Aufsteigen der Flüssigkeit in die Spitze bewirkt. Die durch das Pumpelement bewegte Luftsäule sorgt für einen Fluidstrom, aufgrund dessen die Bewegung der Flüssigkeit in die beziehungsweise aus der Pipettenspitze erfolgt.

Aus dem Stand der Technik ergeben sich mehrere Probleme. So ist zum Beispiel ein jeder Umfüllschritt eine potenzielle Fehlerquelle. Durch Unachtsamkeit der Laboranten, Fehler in den Maschinen oder den verwendeten Pipetten kann es zu Messungenauigkeiten kommen, die das Ergebnis negativ beeinflussen. Ebenso birgt jeder einzelne Verfahrensschritt das Risiko eines Verschüttens der bearbeiteten Fluide/Proben. Dies ist jedoch etwas, was im Laboralltag im Hinblick auf die Gesundheit der Arbeitskräfte vor Ort und die meist kosten- und zeitintensive Herstellung oder Beschaffung der Proben vermieden werden soll.

Um eine sterile Arbeitsweise zu ermöglichen, ist es im Stand der Technik notwendig, nach jedem Arbeitsschritt die Pipettenspitze zu wechseln. Dies bedeutet, dass nach dem Umpipettieren des ersten Fluids aus dem ersten Behält in den Mischbehälter die Pipettenspitze gegen eine frische ausgetauscht werden muss, bevor das zweite Fluid aus dem zweiten Behälter in den Mischbehälter hinzugegeben werden kann.

Dieses notwendige Wechseln der Pipettenspitze ist ein Kostenfaktor und ein Vorgang, der viele Ressourcen benötigt. Das Wechseln der Spitzen benötigt Zeit und Ressourcen. Zudem stellt er eine Umweltbelastung dar, weil jede einzelne Pipettenspitze hergestellt, steril verpackt und zum jeweiligen Einsatzort transportiert werden muss. Das Gleiche gilt für die Herstellung und Bereitstellung der Mischbehälter, in denen die Fluide gemischt werden. Auch sie sind Einmalprodukte, die nach der Verwendung entsorgt werden müssen. Genau wie bei den Pipettenspitzen müssen diese benutzen Mischbehälter extra hergestellt und angeliefert werden und nach der Verwendung entsorgt werden, was ebenfalls verschiedene Ressourcen, wie Zeit, Rohstoffe und Geld benötigt.

Im Verfahren nach dem Stand der Technik ist es zudem nicht möglich, den gesamten Mischvorgang und potenziell währenddessen ablaufende Reaktionen zu verfolgen. Denn sobald das zweite Fluid dem ersten im Mischbehälter zugefügt wird, startet der Mischvorgang. Die ersten Reaktionen beginnen zu laufen, noch während der Mischvorgang im Gange ist und bevor das fertig gemischte Fluid aus dem Mischbehälter in einen Analysebehälter überführt werden kann, in dem das Fluid und die darin ablaufenden Reaktionen überwachbar und analysierbar sind. Dadurch ergibt sich eine Informationslücke über den Zeitraum von Beginn der Mischung bis zum Beginn der Analyse, sodass alle erhobenen Daten und Messwerte unvollständig und damit ungenau sind.

Die Aufgabe der vorliegenden Erfindung besteht darin, ein Verfahren bereitzustellen, das die aus dem Stand der Technik bekannten Nachteile beseitigt. Insbesondere ein Verfahren zum Mischen von Fluiden so zu verbessern, dass eine ressourcenschonendere, sicherere, genauere und schnellere Mischung von Fluiden ermöglicht wird.

Diese Aufgabe wird erfindungsgemäss durch ein Verfahren zum Mischen von Fluiden, eine Pipettenspitze zur Verwendung in einem Verfahren zur Mischung von Fluiden, einer Pipettiervorrichtung zur Verwendung in einem Verfahren zur Mischung von Fluiden und einem Pipettierautomat zur Verwendung von Pipettiervorrichtungen gemäss dem Oberbegriff der unabhängigen Ansprüche gelöst.

Die abhängigen Ansprüche beziehen sich auf besonders vorteilhafte Ausführungsformen der Erfindung.

Erfindungsgemäss wird ein Verfahren zum Mischen von Fluiden vorgeschlagen, welches die folgenden Schritte umfasst ein Bereitstellen einer Pipettenspitze zum Aufnehmen eines Fluids, ein Aufnehmen eines ersten Fluids in die Pipettenspitze, ein Aufnehmen eines zweiten Fluids in die Pipettenspitze, sowie ein Durchmischen und Analysieren des ersten und des zweiten Fluids in der Pipettenspitze.

Durch das Aufnehmen des ersten und des zweiten Fluids in dieselbe Pipettenspitze kann eine Pipettenspitze eingespart werden, sodass die oben angeführten positiven Effekte der Ressourceneinsparung erreicht werden. Zudem entfällt das einzelne Umfüllen eines jeden Fluids in den Mischbehälter, da die Fluide direkt aus ihrem jeweiligen Behälter in den Mischbehälter, in diesem Fall die Pipettenspitze, aufgenommen werden. Dadurch ergeben sich die oben bereits aufgeführten Vorteile einer schnelleren, effizienteren und sichereren Arbeitsweise als Resultat des wegfallenden Umfüllschrittes.

Das Mischen und Analysieren der Fluide in der Pipettenspitze erlaubt dabei eine Überwachung und Messung des gesamten Mischvorgangs und der dabei ablaufenden Reaktionen von Beginn des Mischvorgangs bis zum Ende der beteiligten Reaktionen, sodass hier keine Informationslücke auftritt und die erhaltenen Daten vollständig und damit genauer sind als die, die mit Verfahren aus dem Stand der Technik erhalten wurden.

Zudem spart das Analysieren der Fluide in der Pipettenspitze Zeit, da die Fluide/Proben hierfür nicht erst in eine extra Analysevorrichtung überführt werden müssen. Der Wegfall dieses Schritts und der Analysevorrichtung spart wiederum selbst neben Zeit auch andere Ressourcen ein.

Es versteht sich von selbst, dass mit dem erfindungsgemässen Verfahren auch mehr als zwei Fluide durchmischt und analysiert werden können. Der besseren Lesbarkeit halber wird im Folgenden jedoch weiterhin lediglich von einem ersten Fluid und einem zweiten Fluid gesprochen.

In einem Ausführungsbeispiel kann die Analyse erfolgen, während das erste und zweite Fluid durchmischt werden. So kann der gesamte Durchmischungsvorgang analysiert werden und so Rückschlüsse über den gesamten Ablauf gezogen werden. Nebenbei hat dies den Vorteil, dass der Startzeitpunkt und der Endzeitpunkt der Durchmischung exakt bestimmt werden können. So können weitere Aussagen über die Durchmischung und gegebenenfalls den Reaktionsablauf gemacht werden und die Analyseergebnisse exakt mit dem zeitlichen Ablauf verglichen werden.

In einem Ausführungsbeispiel kann der Inhalt der Pipettenspitze, also das erste Fluid und / oder das zweite Fluid mittels eines Analyseelements analysiert werden, Insbesondere das aus der Mischung resultierende Fluid kann durch das Analyseelement analysiert werden. Das Analyseelement ist dabei bevorzugt eine Vorrichtung, die mindestens einen Parameter beziehungsweise Messwert über das Fluids ermitteln kann, wobei er über einen Sensor verfügt, der den entsprechenden Parameter und dessen Verlauf über die Zeit messen kann. Bevorzugt verfügt das Analyseelement auch über einen Emitter, der alle notwendigen Signale, insbesondere Strahlung, aussenden kann, die für die Analyse durch den Sensor notwendig sind. Diese Kombination aus Emitter und Sensor wird im Rahmen dieser Anmeldung als Analyseeinheit bezeichnet, welche insbesondere Teil des Analyseelements sein kann. Zur Analyse selbst kann dabei beispielsweise Photometrie verwendet werden.

Bei der Photometrie sendet der Emitter Licht in mindestens einer Bandbreite ab, sodass dieses durch das Fluid dringt und auf der anderen Seite des Fluids durch den Sensor detektiert werden kann. Durch die Differenz aus emittiertem Licht und detektierten Licht lässt sich so eine Aussage über die optische Dichte des Fluids treffen. Für die Berechnung dieser Daten kann ein Rechenmodul verwendet werden, welches sowohl von dem Analyseelement umfasst als auch ein externes Teil sein kann. Es versteht sich dabei von selbst, dass auch andere Analyseverfahren als die Photometrie hierfür genutzt werden können, die dem Fachmann bekannt sind. Beispielsweise kann das Analyseelement eine Strahlung aussenden, und die Veränderung, die diese Strahlung beim Durchqueren der Pipettenspitze erfährt, detektieren und so Rückschlüsse auf das erste und / oder zweite Fluid in der Pipettenspitze zulassen. Auf diese Weise wird also die Absorption des ersten und / oder des zweiten Fluids gemessen und analysiert. Die Strahlung kann dabei beispielsweise polychromatische Röntgenstrahlung zur Röntgenfluoreszenzanalyse, Radiostrahlung, sichtbares Licht und / oder UV-VIS Strahlung sein. Ebenso ist es denkbar, dass mit einem ähnlichen Aufbau andere Parameter des ersten Fluids und / oder zweiten Fluids wie etwa Temperatur, Fluoreszenz oder die elektrische Leitfähigkeit überwacht und zur Analyse genutzt werden können.

In einem weiteren erfindungsgemässen Verfahren kann das Analyseelement das erste Fluid und / oder das zweite Fluid mittels einer Kamera analysieren, indem eine optische Überwachung stattfindet. Dies hat unter anderem den Vorteil, dass die Kamera Strahlung jenseits des sichtbaren Spektrums oder der Wahrnehmungsschwelle des menschlichen Auges wahrnehmen und aufzeichnen kann und somit neue Informationen bereitstellen kann.

In einem weiteren erfindungsgemässen Verfahren kann das zweite Fluid ein Reagenz, ein Farbstoff oder ein Marker sein. Im Unterschied zu Farbstoff und Marker ist das Reagenz ein Fluid, welches mit dem ersten Fluid reagiert und mindestens einen dritten Stoff bildet, der z.B. in einem weiteren Verfahren Verwendung findet oder ein erwünschtes Produkt der Reaktion des ersten Fluids mit dem zweiten Fluid ist.

Farbstoffe und Marker sind dagegen Fluide, die primär dafür genutzt werden, den Mischvorgang und / oder die darin stattfindenden Reaktionen zu überwachen. Farbstoffe, beispielsweise interkalierende Farbstoffe können dazu genutzt werden, Stoffe bzw. Stoffmengen in einem Gemisch nachzuweisen und so Rückschlüsse auf die Zusammensetzung des Gemischs zu ziehen.

Marker, etwa radioaktive oder fluoreszierende Marker, erfüllen einen ähnlichen Zweck wie Farbstoffe. Da sie aber häufig noch spezifischer binden als Farbstoffe, ist es hierdurch möglich feinere Unterschiede in der Zusammensetzung des Gemischs zu ermitteln. Zudem können Marker es ermöglichen, bereits vor oder zu Beginn des Mischungsprozesses Strukturen zu markieren und durch ihre hohe Bindespezifität bis zum Ende des Mischungsvorgangs und der damit einhergehenden Reaktionen gebunden zu bleiben, wodurch sich der Weg dieser Strukturen während des gesamten Vorgangs nachvollziehen lässt. Dies erlaubt einen tiefen Einblick in den Ablauf und die Funktionsweise der untersuchten Vorgänge. Weiterhin können fluoreszierende Farbstoffe dazu genutzt werden, den Fortschritt der Reaktion zu bestimmen. Etwa, indem überwacht wird, ob sich die Fluoreszenz ändert. Sollte dies nicht mehr der Fall sein, kann davon ausgegangen werden, dass der Mischvorgang und die damit zusammenhängenden Reaktion beendet sind.

In einem bevorzugten Verfahren können das erste Fluid und das zweite Fluid durch Auf- und Abbewegen in der Spitze gemischt werden. Durch das Auf- und Abbewegen wird eine gleichmässige und zügige Durchmischung ermöglicht, ohne dabei eine starke mechanische Belastung auf die Fluide auszuüben. Gerade beim Mischen von Fluiden, die fragile Strukturen wie etwa Zellen, Makroproteine oder Aminosäuresequenzen enthalten ist dies wichtig, damit deren Struktur und damit Funktionsweise nicht gestört wird.

In einem bevorzugten Verfahren kann beim Aufnehmen des zweiten Fluids in die Pipettenspitze in der Pipettenspitze ein Luftpolster zwischen dem ersten Fluid und dem zweiten Fluid eingebracht werden, um eine sofortige Reaktion zu verhindern und so den Reaktionsstartpunkt festzulegen. Dies hat den Vorteil, dass sichergestellt wird, dass die Analyseeinheit funktionsbereit ist, bevor der Mischvorgang beginnt, sodass der gesamte Vorgang analysiert werden kann und somit, im Gegensatz zum Stand der Technik, keine Informationslücke besteht, wodurch vollständige Daten generiert werden können.

In einer bevorzugten Ausführungsform des Verfahrens kann das zweite Fluid aus einem zweiten Behälter in die Pipettenspitze aufgenommen werden, wobei der zweite Behälter bevorzugt eine Küvette ist und / oder wobei zum Mischen der Fluide das gesamte Volumen der Pipettenspitze und des zweiten Behälters als Mischkammer genutzt werden kann. Dies hat den Vorteil, dass der Mischvorgang schneller durchgeführt werden kann, weil mehr Volumen zum Mischen bereitsteht. Zudem können auch grössere Probenvolumen leichter durchmischt werden, weil hierfür nicht nur das Volumen der Pipettenspitze zur Verfügung steht, sondern zusätzlich das des zweiten Behälters.

In einer bevorzugten Ausführungsform des Verfahrens kann der zweite Behälter mit der Pipettenspitze strömungsverbunden sein und das erste Fluid und das zweite Fluid beim Mischvorgang dergestalt auf- und abpipettiert werden, dass das gesamte Volumen der Pipettenspitze und des zweiten Behälters als Mischkammer benutzt werden kann. Neben den Vorteilen eines schnelleren Mischens und dem Verarbeiten grösserer Volumen, wie oben bereits beschreiben, ermöglicht die Strömungsverbindung zwischen zweitem Behälter und Pipettenspitze eine sicherere Arbeitsweise. Die Strömungsverbindung verhindert ein ungewolltes Austreten der bearbeiteten Fluide, sodass die Sicherheit im Labor bei Arbeiten mit potenziell gesundheitsschädlichen Fluiden erhöht wird. Zudem kann so noch einmal schneller gearbeitet werden, weil eben jene Gefahr des Austretens der oder des Fluid minimiert ist. Das ist gleichbedeutend mit einer Reduktion der Kosten, weil die häufig teuren und langwierig herzustellenden Fluide so weniger häufig verschüttet werden und somit verloren gehen.

In einer bevorzugten Ausführungsform des Verfahrens kann der Startzeitpunkt des Mischvorgangs und / oder der Endzeitpunkt des Mischvorgangs durch die Analyse des Innenraums der Pipettenspitze bestimmt werden und / oder die Pipettenspitze ein Messfenster zur Analyse des Inhalts der Pipettenspitze umfassen. Das Messfenster kann dabei dergestalt an der Pipettenspitze angebracht sein, dass der Mischvorgang durch das Messfenster mittels des Analyseelement analysiert werden kann. Neben den bereits oben genannten Vorteilen, die das Bestimmen des Startzeitpunkts bzw. des Endzeitpunkts des Mischvorgangs durch die Analyse des Innenraums der Pipettenspitze bringt, hat dieses bevorzugte Verfahren einen weiteren Vorteil. Das Messfenster ermöglicht eine Analyse, die möglichst wenig dadurch beeinflusst wird, dass sich die analysierten Fluide in der Pipettenspitze befinden. Strahlung, und im Speziellen Strahlung des sichtbaren Spektrums, wie sie etwa bei der Photometrie Verwendung findet, wird durch das Material und die Dicke der Pipettenspitzenwand / des Pipettenspitzenkörpers beeinfluss bzw. gebrochen. Die Verwendung eines Messfensters eignet sich daher, um diese Störfaktoren zu reduzieren, ohne dabei die für die eigentliche Pipettenspitze notwendigen und vorteilhaften Eigenschaften des Materials der Pipettenspitzenwand / des Pipettenspitzenkörpers gänzlich zu ersetzen. Das Messfenster ist lediglich im Bereich des Strahlengangs der Analyseeinheit angeordnet, sodass dieser möglichst ungehindert erfolgen kann.

Das Messfenster (oder auch die gesamte Pipettenspitze) kann dabei aus einem transparenten Kunststoff bestehen oder anderen dem Fachmann bekannten optisch transparenten Materialien, die sich zum Einbau in eine Pipettenspitze eignen.

Im Rahmen der Erfindung bedeutet optisch transparent, dass das Messfenster (zumindest in einem Bereich des Messfensters) durchlässig für elektromagnetische Wellen / Strahlung ist, insbesondere für elektromagnetische Wellen / Strahlung im UV/Vis-Bereich und / oder NIR-Bereich beziehungsweise für die Primärstrahlung.

Insbesondere kann ein amorphes Polymer als transparenter Kunststoff verwendet werden. Die Pipettenspitze und insbesondere das Messfenster kann dabei ein Cycloolefin-Copolymer umfassen. Cycloolefin-Copolymere werden in der Regel durch metallocen-katalysierte Copolymerisation von Cycloolefinen mit Alk-1-enen gewonnen. Im Gegensatz zu teilkristallinen Polymeren wie Polyethylen und Polypropylen sind Cycloolefin-Copolymere amorph und damit optisch transparent. Durch die geringe Doppelbrechung und optisch Transparenz können die Cycloolefin-Copolymere besonders bevorzugt für die erfindungsgemässen optische Analysen (durch das Analyseelement) verwendet werden.

Dies hat den Vorteil, dass der Einfluss des Pipettenspitzenkörpers / der Pipettenspitzenwand auf die Analyse des Fluids reduzieren lässt, sodass dieses aus dem Stand der Technik bekanntes Problem gelöst werden kann.

Ebenso kann die Pipettenspitze und / oder das Messfenster aus Glas hergestellt sein. Glas hat gegenüber Kunststoffen den Vorteil, dass es weniger anfällig für farbliche Veränderungen ist, die beispielsweise durch lange Lagerungszeiten oder einfallende Strahlung wie etwa UV-Strahlung hervorgerufen werden. Zudem ist Glas weniger anfällig für Kratzer als die meisten Kunststoffe. Beides, die Farbechtheit und die Kratzerresistenz können den Einfluss reduzieren, den die Pipettenspitzenwand / der Pipettenspitzenkörper auf den Messvorgang hat.

In einer bevorzugten Ausführungsform des Verfahrens n kann der zweite Behälter eine Küvette sein, wobei die Küvette über ein Messfenster verfügt, und das Messfenster dergestalt an der Küvette angebracht ist, dass der Mischvorgang durch das Messfenster mittels des Analyseelements analysiert werden kann. Dies hat den Vorteil, dass der Vorgang nicht nur in der Pipettenspitze mittels eines Messfensters besonders vorteilhaft beobachtet und analysiert werden kann, sondern, dass dies auch in der Küvette möglich ist, sodass die Qualität der während der Analyse erhaltenen Daten gesteigert werden kann. Zusätzlich kann so etwa ein Farbstoff aspiriert werden, der sich bereits in der Küvette befindet und seine Mischung / Reaktion mit dem oder den Fluiden untersucht werden, das oder die sich bereits in der Pipettenspitze befindet/befinden. Selbstverständlich kann statt des Farbstoffs auch ein anderes Fluid aus der Küvette in die Pipettenspitze aspiriert werden. Auch hier ist es möglich, durch das Aspirieren eines Luftpolsters zwischen dem oder den sich bereits in der Pipettenspitze befindlichen Fluiden und dem aus der Küvette aspirierten Fluid, den Start der Mischung zeitlich exakt zu planen und zu bestimmen.

Darüber hinaus bietet die Verwendung des zweiten Behälters und der Küvette im Speziellen die Möglichkeit, die gesamte Probe und die verwendeten Gefässe nach dem Mischungs- und Analysevorgang in einem Arbeitsschritt zu entsorgen.

Ausserdem wird eine erfindungsgemässe Pipettiervorrichtung zur Dosierung einer Flüssigkeit mittels eines Fluidstromes in einem erfindungsgemässen Verfahren vorgeschlagen. Die Pipettiervorrichtung umfasst dabei ein Mittel zum Befüllen der an der Pipettiervorrichtung angebrachten Pipette durch den Fluidstrom, wobei die Pipettenspitze mit dem Mittel zum Befüllen und Entleeren strömungsverbunden ist. Dadurch kann ein Fluid mittels der Pipettiervorrichtung in die Pipettenspitze aufgenommen werden.

Weiterhin wird ein erfindungsgemässer Pipettierautomat umfassend eine erfindungsgemässe Pipettiervorrichtung und eine Bewegungsvorrichtung zur Bewegung der Pipettiervorrichtung vorgeschlagen.

Weiterhin wird eine erfindungsgemässe Pipettiervorrichtung zur Dosierung einer Flüssigkeit mittels eines Fluidstromes vorgeschlagen, wobei die Pipettiervorrichtung ein Mittel zum Befüllen und Entleeren einer an der Pipettiervorrichtung angebrachten Pipettenspitze durch den Fluidstrom umfasst, wobei die Pipettenspitze mit dem Mittel zum Befüllen und Entleeren strömungsverbunden ist. Das Mittel zum Befüllen kann dabei zum Beispiel ein Pipettenkolben sein. Dieser kann manuell oder automatisch betrieben werden. Selbstverständlich sind auch andere Mittel denkbar, die dazu geeignet sind, einen Fluidstrom zu erzeugen.

In einem bevorzugten Ausführungsbeispiel einer erfindungsgemässen Pipettiervorrichtung kann das Mittel zum Befüllen und Entleeren eine Vorrichtung zur Erzeugung oder Veränderung eines Drucks, insbesondere eine Pumpe mit einer Pumpkammer zur Erzeugung eines Fluidstromes sein. Eine solche Pumpe hat unter anderem den Vorteil, dass das Volumen des Fluidstroms exakt bestimmt, kontrolliert und eingestellt werden kann.

In einem bevorzugten Ausführungsbeispiel einer erfindungsgemässen Pipettiervorrichtung umfasst die Vorrichtung eine Vielzahl von Pipettenspitzen. Dadurch ist es möglich, parallel den Inhalt mehrere Pipettenspitze zu analysieren. Hierdurch ergeben sich Vorteile sowohl für die Automatisierung als auch für ein paralleles Arbeiten. Insbesondere für ein paralleles Arbeiten mit gleichen Proben, aber auch mit unterschiedlichen Proben.

An der Pipettenspitze der erfindungsgemässen Pipettiervorrichtung kann dabei ebenfalls eine Küvette angeordnet sein, um eine Mischung des ersten und des zweiten Fluids sowohl in der Pipettenspitze als auch in der Küvette zu erlauben.

Weiterhin wird ein erfindungsgemässer Pipettierautomat vorgeschlagen, umfassend eine erfindungsgemässe Pipettiervorrichtung, und eine Bewegungsvorrichtung zur Bewegung der Pipettiervorrichtung im Raum / Pipettierautomat. Zudem kann der Pipettierautomat einen Analyseapparat zur Durchführung der Analyse des Fluids in der Pipettenspitze umfassen.

Eine erfindungsgemässe Pipettiervorrichtung kann mittels der Bewegungsvorrichtung in alle Raumrichtungen bewegt werden. Durch die Bewegungsvorrichtung ist es möglich die Pipettiervorrichtung exakt zu bewegen, und so die Qualität der Arbeit zu erhöhen, da die Pipettiervorrichtung nicht von Hand gehalten werden muss. Dies vermindert das Auftreten von Fehlern bei der Befüllung von Pipettenspitzen aufgrund von falscher oder schlechter Positionierung der Pipettenspitze gegenüber dem mit dem ersten und / oder zweiten Fluid gefüllten Behälter. Zudem wird neben dieser Fehlerquelle auch das Gefahrenpotenzial für die Personen vor Ort reduziert, da ein Verschütten der Proben durch den Anwender vermieden wird.

In einem bevorzugten erfindungsgemässen Ausführungsbeispiel des Pipettierautomats kann der Pipettierautomat eine Vielzahl von Pipettiervorrichtungen umfassen. Dies hat den Vorteil, dass parallel gearbeitet werden kann und somit auch in dem Pipettierautomat die oben beschriebenen Vorteile der erhöhten Arbeitsqualität, Geschwindigkeit und Sicherheit genutzt werden können.

In einem weiteren erfindungsgemässen Ausführungsbeispiel des Pipettierautomats verfügt der Pipettierautomat über ein Steuermodul zur Steuerung der Bewegungsvorrichtung. Dieses Steuermodul erlaubt den ferngesteuerten sowie den automatisierten Betrieb der Pipettiervorrichtung. Hierdurch ergeben sich vor allem die bekannten Vorteile der Automatisierung. So kann die Fehlerquote reduziert werden, die gleichbleibende Qualität der Arbeit gewährleistet werden und gleichzeitig können Zeit und somit Kosten für Produktion und Personal gespart werden

In einem bevorzugten erfindungsgemässen Ausführungsbeispiel eines Pipettierautomats verfügt der Pipettierautomat und / oder die Pipettiervorrichtung über ein Sensormodul, dass dem Steuermodul Informationen zur automatisierten Steuerung der Bewegungsvorrichtung bereitstellen kann. Durch diese Informationen ist es möglich, die Position der einzelnen Komponenten des Pipettierautomats zueinander zu überprüfen und gegebenenfalls zu korrigieren, sodass sich die Fehlerrate beim Befüllen und / oder Entleeren reduzieren lässt. Zudem erlaubt die Verwendung eines Sensormoduls und die damit verbundene Überprüfung und Korrektur der Position der Teile des Pipettierautomats zueinander eine autonome Arbeitsweise. Dadurch werden personelle Ressourcen frei, da die Zeit, die für Steuerung und Überwachung des Pipettierautomats notwendig ist, reduziert werden kann. Zudem wird so auch die Sicherheit erhöht, da keine Personen beim Arbeiten in Kontakt mit den Substanzen kommen.

Die Übertragung der Informationen kann über eine Kabelverbindung oder kabellos erfolgen. Bei der kabellosen Informationsübertragung erfolgt die Daten- / Signalübertragung über freien Raum (Luft bzw. Vakuum) als Übertragungsmedium. Die Übertragung kann durch gerichtete oder ungerichtete elektromagnetische Wellen erfolgen. Bevorzugt wird dabei Bluetooth oder WLAN verwendet.

In einem bevorzugten erfindungsgemässer Pipettierautomat umfasst die Vorrichtung einen Vorratsbehälter für Pipettenspitzen. Dies erlaubt eine schnellere Verarbeitung, weil neue Pipettenspitzen direkt bereitgestellt werden können und somit schnell aufgenommen werden können. Darüber hinaus minimiert die Bereitstellung eines Vorratsbehälter mit Pipettenspitzen die Wahrscheinlichkeit einer Kontamination, da von aussen weniger häufig mit dem Pipettierautomaten interagiert werden muss.

Ebenso kann die Vorrichtung einen Vorratsbehälter für Pipettenspitzen umfassen, der dieselben Vorteile bietet, wie der Vorratsbehälter für Pipettenspitze n.

Um das Risiko der Kontamination noch weiter zu senken, kann der Pipettierautomat oder zumindest die Pipettiervorrichtung in einem Gehäuse angeordnet sein. Insbesondere umschliesst das Gehäuse den Pipettierautomaten oder die Pipettiervorrichtung dabei in allen Richtungen, sodass das Gehäuses einen Behandlungsraum bildet, in dem unter einer hermetisch abgeriegelten Atmosphäre gearbeitet werden kann. Vorteilige Effekte werden jedoch auch bereits durch ein Gehäuse ohne eine hermetische Abriegelung erzielt. Zudem ist auch eine blosse Trennwand zur Reduktion von Zugluft oder eine Abdeckung denkbar, die um den Pipettierautomaten oder die Pipettiervorrichtung angeordnet werden können.

Ein Vorteil der erfindungsgemässen Pipettenspitze liegt insbesondere darin, dass bekannte Laborautomaten und Pipettiervorrichtungen einfach zu einem erfindungsgemässen Pipettierautomaten bzw. einer erfindungsgemässen Pipettiervorrichtung aufgerüstet werden können, da die bereits vorhandenen Pipettenspitzen durch die erfindungsgemässen Pipettenspitzen ausgetauscht werden können.

Auch das Nachrüsten eines Analyseapparates in bekannte Laborautomaten und Pipettiervorrichtungen ist denkbar und möglich.

Es versteht sich von selbst, dass die hier genannten Ausführungsbeispiele keinen beschränkenden Charakter haben und die verschiedenen Merkmale der Ausführungsbeispiele sowie die Ausführungsbeispiele selbst miteinander kombinierbar sind.

Im Folgenden wird die Erfindung anhand von Ausführungsbeispielen unter Bezugnahme auf die Zeichnungen näher erläutert. Die Zeichnungen zeigen:
- Fig 1:: eine schematische Darstellung eine aus dem Stand der Technik bekannten Pipettenspitze;
- Fig. 2:: eine schematische Darstellung einer Pipettenspitze für ein erfindungsgemässes Verfahren;
- Fig. 3:: eine schematische Darstellung einer Pipettenspitze für ein erfindungsgemässen Verfahren mit einem Analyseelement;
- Fig. 4a:: eine schematische Darstellung einer Pipettenspitze für ein erfindungsgemässes Verfahren mit hohem Füllstand;
- Fig. 4b:: eine schematische Darstellung einer Pipettenspitze für ein erfindungsgemässes Verfahren mit hohem Füllstand;
- Fig. 5:: eine schematische Darstellung einer Pipettenspitze für ein erfindungsgemässes Verfahren mit Luftpolster;
- Fig. 6:: eine schematische Darstellung einer erfindungsgemässen Pipettiervorrichtung;
- Fig. 7:: eine schematische Darstellung einer erfindungsgemässen Pipettiervorrichtung mit Analyseeinheit;
- Fig. 8:: eine schematische Darstellung eines erfindungsgemässen Pipettierautomats.

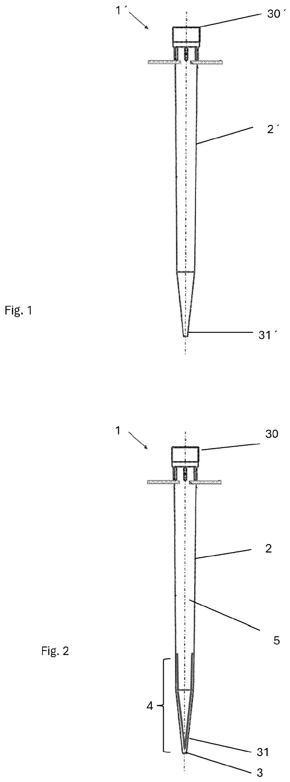

Zur Erläuterung einer bekannten Pipettenspitze wird im Folgenden auf die Fig. 1 Bezug genommen, anhand derer der Stand der Technik näher beschrieben wird. Zur Unterscheidung des Standes der Technik von der vorliegenden Erfindung sind die Bezugszeichen, die sich auf Merkmale von bekannten Beispielen beziehen, mit einem Hochkomma versehen, während Merkmale erfindungsgemässer Ausführungsbeispiele mit Bezugszeichen versehen sind, die kein Hochkomma tragen.

Figur 1 zeigt eine Pipettenspitze 1' mit einem Verbindungsbereich 30', einer Pipettenspitzenwand 2' und einer Spitze 31'. Die Pipettenspitze l' lässt sich mittels des Verbindungsbereichs 30' an eine Pipettiervorrichtung (nicht gezeigt) anbringen, bevorzugt strömungsverbunden anbringen. Dadurch ist es möglich, ein Fluid mittels der Pipettiervorrichtung über die Spitze 31' in die Pipettenspitze aufzunehmen und /oder abzugeben.

Figur 2 zeigt eine schematische Darstellung einer Pipettenspitze 1 für ein erfindungsgemässes Verfahren mit einem Verbindungsbereich 30, einer Pipettenspitzenwand 2, einem Innenraum 5, einer ersten Öffnung 3, einem Messfenster 4 und einer Spitze 31. Die Pipettenspitze 1 lässt sich mittels des Verbindungsbereichs 30 an eine Pipettiervorrichtung (nicht gezeigt) anbringen, bevorzugt strömungsverbunden anbringen. Durch die erste Öffnung 3 können ein erstes Fluid und ein zweites Fluid (nicht gezeigt) in die Pipettenspitze 1 aufgenommen werden. Die Fluide werden dann im Innenraum 5 der Pipettenspitze 1 gemischt und über das Messfenster 4 analysiert.

Die Analyse kann dabei auch während des Mischvorgangs erfolgen.

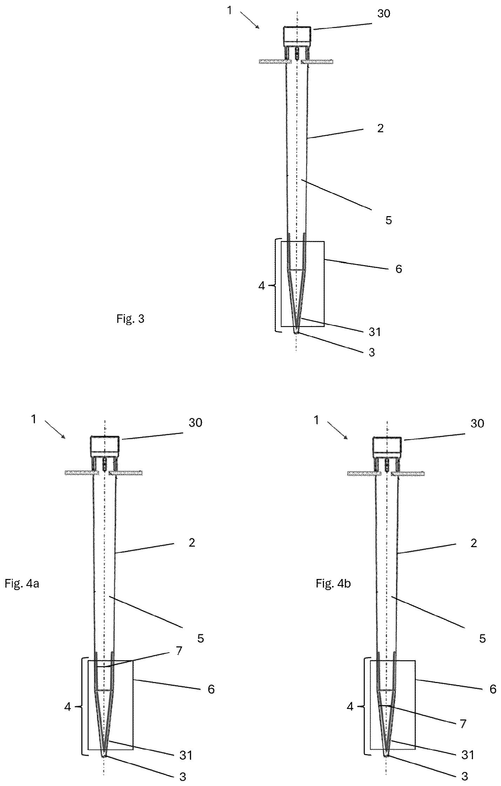

Figur 3 zeigt eine schematische Darstellung einer Pipettenspitze 1 für ein erfindungsgemässen Verfahren mit einem Analyseelement 6, das den Inhalt der Pipettenspitze 1 analysieren kann, insbesondere das aus der Mischung resultierende Fluid (nicht gezeigt).

Die Analyse des ersten, des zweiten und / oder des resultierenden Fluids kann dabei insbesondere erfolgen, indem das Analyseelement 6 Strahlung abstrahlt und die Absorption des ersten Fluids, des zweiten Fluids und / oder des resultierenden Fluids misst, und / oder durch Photometrie, und / oder mittels einer Kamera indem es eine optische Überwachung durchführt, und / oder indem die Temperatur der Fluide durch einen Temperatursensor überwacht wird.

Die in Figur 3 gezeigt Pipettenspitze 1 kann ebenfalls in einem erfindungsgemässen Verfahren verwendet werden, in dem das zweite Fluid ein Reagenz, ein Farbstoff oder ein Marker ist.

Figur 4a und 4b zeigen schematische Darstellungen einer Pipettenspitze 1 für ein erfindungsgemässes Verfahren mit unterschiedlichen Füllständen 7. Die unterschiedlichen Füllstände 7 entstehen dadurch, dass das erste und das zweite Fluid durch Auf- und Abbewegen in der Pipettenspitze gemischt werden.

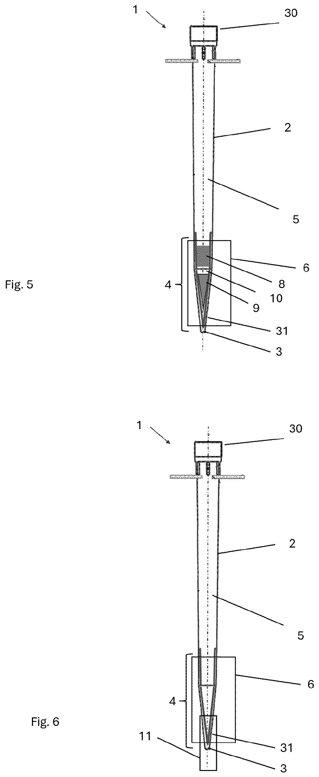

Figur 5 zeigt eine schematische Darstellung einer Pipettenspitze 1 für ein erfindungsgemässes Verfahren mit einem Luftpolster 10 zwischen dem ersten Fluid 8 und dem zweiten Fluid 9.

Figur 6 zeigt eine schematische Darstellung einer Pipettenspitze 1 für ein erfindungsgemässes Verfahren, wobei ein zweiter Behälter 11 an der Pipettenspitze angeordnet ist, bevorzugt strömungsverbunden angeordnet ist, sodass zum Mischen des ersten und des zweiten Fluids (nicht gezeigt) das gesamte Volumen der Pipettenspitze und des zweiten Behälters 11 genutzt werden kann. Der zweite Behälter 11 ist dabei besonders bevorzugt eine Küvette.

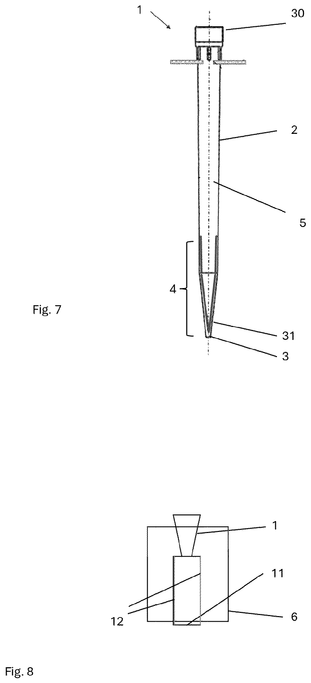

Figur 7 zeigt eine schematische Darstellung einer Pipettenspitze 1 für ein erfindungsgemässes Verfahren, wobei der Startzeitpunkt des Mischvorgangs und / oder der Endzeitpunkt des Mischvorgangs durch die Analyse des Innenraums 5 der Pipettenspitze 1 bestimmt wird und / oder die Pipettenspitze 1 ein Messfenster 4 zur Analyse des Inhalts der Pipettenspitze 1 umfasst, und das Messfenster 4 dergestalt an der Pipettenspitze 1 angebracht ist, dass der Mischvorgang durch das Messfenster 4 mittels des Analyseelements 6 analysiert wird.

Figur 8 zeigt eine schematische Darstellung einer Pipettenspitze 1 für ein erfindungsgemässes Verfahren, wobei der zweite Behälter 11 eine Küvette ist, wobei die Küvette über ein Küvettenmessfenster 12 verfügt, und das Küvettenmessfenster 12 dergestalt an der Küvette 11 angebracht ist, dass der Mischvorgang durch das Küvettenmessfenster 12 mittels des Analyseelements 6 analysiert wird.

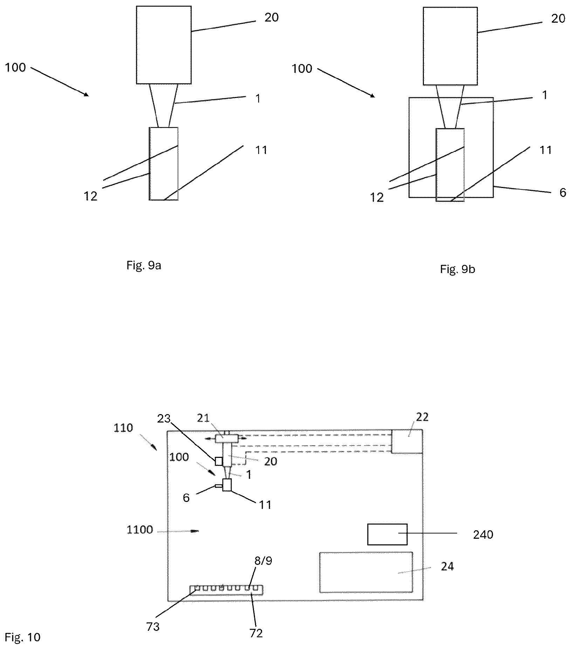

Figur 9a und 9b zeigen eine schematische Darstellung einer erfindungsgemässen Pipettiervorrichtung 100 zur Dosierung eines Fluids mittels eines Fluidstromes in einem erfindungsgemässen Verfahren, wobei die Pipettiervorrichtung ein Mittel 20 zum Befüllen der an der Pipettiervorrichtung 100 angebrachten Pipettenspitze 1 durch den Fluidstrom umfasst, wobei die Pipettenspitze 1 mit dem Mittel 20 zum Befüllen und Entleeren strömungsverbunden ist, sowie die schematische Anordnung eines zweiten Behälters 11 an der Pipettenspitze 1. Figur 9b zeigt zusätzlich die schematische Anordnung einer Analyseeinheit 6 an der Pipettiervorrichtung 100.

Figur 10 zeigt eine schematische Darstellung eines Pipettierautomats 110 für die Verwendung in einem erfindungsgemässen Verfahren, umfassend eine erfindungsgemässe Pipettiervorrichtung 100 und eine Bewegungsvorrichtung zur Bewegung der Pipettiervorrichtung.

Der Pipettierautomat 110 umfasst einen Behandlungsraum 1100 zur Aufnahme des ersten Fluids 8 und des zweiten Fluids 9 und eine erfindungsgemässe Pipettiervorrichtung 100, die zur Durchführung mindestens eines Bearbeitungsschrittes am ersten Fluid 8 und / oder am zweiten Fluid 9 in dem Behandlungsraum 1100 angeordnet ist. Zudem umfasst der Pipettierautomat ein Fluidmodul 72 in dem Fluidbehälter 73 angeordnet sind.

Der Pipettierautomat 110 umfasst dabei eine Pipettiervorrichtung 100, und eine Bewegungsvorrichtung 21 zur Bewegung der Pipettiervorrichtung 100. Die Bewegungsvorrichtung 21 erlaubt die Bewegung der Pipettiervorrichtung 100 in alle Richtungen im Raum.

Der Pipettierautomat 110 kann dabei über eine Vielzahl von Pipettiervorrichtungen 100 verfügen.

Der Pipettierautomat 110 verfügt dabei über ein Steuermodul 22 zur Steuerung der Bewegungsvorrichtung 21.

Es ist dabei möglich, dass der Pipettierautomat 110 und / oder die Pipettiervorrichtung 100 über ein Sensormodul 23 verfügt, das dem Steuermodul 22 Informationen zur automatisierten Steuerung der Bewegungsvorrichtung 21 bereitstellt.

Der Pipettierautomat 110 verfügt dabei über Vorratsbehälter 24 für Pipettenspitzen 1 sowie über Vorratsbehälter 240 zweite Behälter 11.

## Patentansprüche

1. Verfahren zum Mischen von Fluiden, umfassend die folgenden Schritte:
a) Bereitstellen einer Pipettenspitze (1) zum Aufnehmen eines Fluids,
b) Aufnehmen eines ersten Fluids (8) in die Pipettenspitze (1),
c) Aufnehmen eines zweiten Fluids (9) in die Pipettenspitze(1),
d) Durchmischen und analysieren des ersten (8) und des zweiten Fluids (9) in der Pipettenspitze (1).

2. Verfahren nach Anspruch 1, wobei die Analyse erfolgt, während das erste (8) und zweite Fluid (9) durchmischt werden.

3. Verfahren nach Anspruch 1 oder 2, wobei der Inhalt der Pipettenspitze (1) mittels eines Analyseelements (6) analysiert wird, insbesondere das aus der Mischung resultierende Fluid analysiert wird.

4. Verfahren nach einem der vorangehenden Ansprüche, wobei das Analyseelement (6) Strahlung abstrahlt und die Absorption des ersten Fluids (8) und / oder des zweiten Fluids (9) misst, um das erste Fluid (8) und oder das zweite Fluid (9) zu analysieren.

5. Verfahren nach einem der vorangehenden Ansprüche, wobei das Analyseelement (6), das erste Fluid (8) und / oder das zweite Fluid (9) durch Photometrie analysiert.

6. Verfahren nach einem der vorangehenden Ansprüche, wobei das Analyseelement (6) das erste Fluid (8) und / oder das zweite Fluid (9) mittels einer Kamera analysiert, indem eine optische Überwachung stattfindet.

7. Verfahren nach einem der vorangehenden Ansprüche, wobei das Analyseelement (6) das erste Fluid (8) und / oder das zweite Fluid (9) analysiert, indem dessen Temperatur durch einen Temperatursensor gemessen wird.

8. Verfahren nach einem der vorangehenden Ansprüche, wobei das zweite Fluid (9) ein Reagenz, ein Farbstoff oder ein Marker sein kann.

9. Verfahren nach einem der vorangehenden Ansprüche, wobei das erste (8) und das zweite Fluid (9) durch Auf- und Abbewegen in der Spitze (31) gemischt werden.

10. Verfahren nach einem der vorangehenden Ansprüche, wobei beim Aufnehmen des zweiten Fluids (9) in die Pipettenspitze (1) ein Luftpolster (10) in der Pipettenspitze (1) zwischen dem ersten Fluid (8) und dem zweiten Fluid (9) eingebracht wird, um eine sofortige Reaktion zu verhindern und so den Reaktionsstartpunkt festzulegen.

11. Verfahren nach einem der vorangehenden Ansprüche, wobei das zweite Fluid (9) aus einem zweiten Behälter (11) in die Pipettenspitze (1) aufgenommen wird, wobei der zweite Behälter (11) bevorzugt eine Küvette ist und / oder wobei zum Mischen der Fluide das gesamte Volumen der Pipettenspitze (1) und des zweiten Behälters (11) als Mischkammer genutzt wird.

12. Verfahren nach Anspruch 11, wobei der zweite Behälter (11) mit der Pipettenspitze (1) strömungsverbunden ist und das erste Fluid (8) und das zweite Fluid (9) beim Mischvorgang dergestalt auf- und abpipettiert werden, dass das gesamte Volumen der Pipettenspitze (1) und des zweiten Behälters (11) als Mischkammer benutzt werden kann.

13. Verfahren nach einem der vorangehenden Ansprüche, wobei der Startzeitpunkt des Mischvorgangs und / oder der Endzeitpunkt des Mischvorgangs durch die Analyse des Innenraums (5) der Pipettenspitze (1) bestimmt wird und / oder die Pipettenspitze (1) ein Messfenster (4) zur Analyse des Inhalts der Pipettenspitze (1) umfasst, und das Messfenster (4) dergestalt an der Pipettenspitze (1) angebracht ist, dass der Mischvorgang durch das Messfenster (4) mittels des Analyseelement (6) analysiert wird.

14. Verfahren nach einem der vorangehenden Ansprüche, wobei der zweite Behälter (11) eine Küvette ist, wobei die Küvette über ein Messfenster (12) verfügt, und das Messfenster (12) dergestalt an der Küvette angebracht ist, dass der Mischvorgang durch das Messfenster (12) mittels des Analyseelement (6) analysiert wird.

15. Pipettiervorrichtung zur Dosierung einer Flüssigkeit mittels eines Fluidstromes in einem Verfahren nach Anspruch 1-14, umfassend
ein Mittel (20) zum Befüllen der an der Pipettiervorrichtung (100) angebrachten Pipettenspitze (1) durch den Fluidstrom, wobei die Pipettenspitze (1) mit dem Mittel (20) zum Befüllen und Entleeren strömungsverbunden ist.

16. Pipettierautomat umfassend eine Pipettiervorrichtung (100) nach Anspruch 15, und eine Bewegungsvorrichtung (21) zur Bewegung der Pipettiervorrichtung (100).
